# EUROPEAN PATENT APPLICATION

(11) **EP 3 582 046 A1**
(43) Date of publication of application: **18.12.2019**
(21) Application number: 18193176.7
(22) Date of filing: 07.09.2018
(51) Int. Cl.: G05B 19/4093, G05B 19/4097, G05B 19/4099

(54) **SELECTING THE SAME MACHINING STRATEGY FOR MULTIPLE FEATURES**

(30) Priority: 14.06.2018 EP 18177834
(71) Applicant: Sandvik Machining Solutions AB, 811 81 Sandviken (SE)
(72) Inventor: KALHORI, Vahid, SE-802 67 Gälve (SE); NORDELL, Hugo, 129 36 Hägersten (SE); VANBERG, Mattias, 802 50 Gälve (SE)
(74) Representative: Sandvik

(57) **Abstract**

A method (500) and a corresponding system (180) and computer program are provided. A model (150) of an object (400) to be manufactured via subtractive manufacturing is obtained (501). A plurality of geometric features (401, 402) to be machined as part of manufacturing the object is identified (502) based on the model. Strategies for machining the respective geometric features via subtractive manufacturing are selected (503). Instructions for causing one or more machine tools (110) to manufacture the object in accordance with the selected strategies is provided (504). Selecting strategies for machining the respective geometric features via subtractive manufacturing comprises selecting (505) a subset of the plurality of geometric features, and selecting (506) the same strategy for machining all of the geometric features (402) in the subset. The strategy for machining all of the geometric features in the subset is selected jointly for all of the geometric features in the subset.

## Description

### Technical field

The present disclosure generally relates to machining, and in particular to process planning for machining operations for subtractive manufacturing.

### Background

Computer-aided design (CAD) models are often employed to define objects to be manufactured. Tolerances and other requirements for the objects to be manufactured may also be obtained via product and manufacturing information (PMI). The manufacturing may be performed via machining operations performed by one or more machine tools. A cutting tool mounted in the machine tool is moved by the machine tool relative to a work piece, so that the cutting tool cuts away material from the work piece to form the object to be manufactured.

Computer-aided manufacturing (CAM) is typically employed to decide how to manufacture the object defined by the CAD model. This is a complicated task involving many factors/parameters such as selecting machine tools, operation sequences (for example involving roughing, semi-finishing and finishing), operation strategies, fixtures for holding the work piece, cutting tools, tool paths, and cutting data (such as feed rate, cutting speed, and depth of cut). These factors affect the quality and precision of the manufactured object, and may also affect the manufacturing time and/or wear on the cutting tools. Hence, CAM programmers often need plenty of time and experience for making suitable tradeoffs so as to reach a suitable solution to this complicated task. Modern CAM software may include some elements of automation for assisting CAM programmers, but CAM programmers still need to rely on experience as well as trial and error to actually reach a suitable solution. An object to be manufactured may include many different geometric features to be machined. It may therefore take the CAM programmer plenty of time to go through all those features and define how these features are to be machined.

Computer numerically controlled (CNC) machine tools are typically employed for the manufacturing. Post-processing is employed to convert the result of the CAM programming into machine code executable by the control system of the CNC machine tool in which the object is to be manufactured. Machine operators (or CNC operators) often adapt or modify the machine code based on their own knowledge and experience of the machine tool. Preference as regards machining method and for achieving desired results may for example lead the machine operator to modify the machine code. It may also be necessary to modify the machine code to make corrections for mistakes made in the CAM programming. CNC operators may need plenty of time and/or experience for making appropriate modifications of the machine code. Moreover, test runs are often employed to check that the machine code actually causes the machine to perform as expected. Computer simulations may also be performed to detect potential problems. Test runs and simulations may for example incur extra costs and/or cause delays.

It would be desirable to provide new ways to address one or more of the abovementioned issues.

### Summary

Methods, systems and computer programs having the features defined in the independent claims are provided for addressing one or more of the abovementioned issues. Preferable embodiments are defined in the dependent claims.

Hence, a first aspect provides embodiments of a method. The method comprises obtaining a model of an object to be manufactured via subtractive manufacturing (such as metal cutting), and identifying, based on the model, a plurality of geometric features to be machined as part of manufacturing the object. The method comprises selecting strategies for machining the respective geometric features via subtractive manufacturing, and providing instructions (for example machine tool code, such as CNC code) for causing one or more machine tools to manufacture the object in accordance with the selected strategies. Selecting strategies for machining the respective geometric features via subtractive manufacturing comprises selecting a subset of the plurality of geometric features, and selecting the same strategy for machining all of the geometric features in the subset (in other words, for machining each of the geometric features in the subset). The strategy (which is referred to above as "the same strategy") for machining all of the geometric features in the subset is selected jointly for all of the geometric features in the subset. In other words, the decision regarding which strategy to employ is made collectively (or jointly) for all of the geometric features in the subset. The instructions provided for causing one or more machine tools to manufacture the object in accordance with the selected strategies may for example cause the collectively (or jointly) selected strategy to be repeated for each of the geometric features in the subset.

Traditionally, a CAM programmer deals with one geometric feature at a time, and defines how this feature is to be machined, before moving on to the next geometric feature. Hence, even if some features are very similar, the CAM programmer has to repeat the work of defining a suitable machining strategy (for example selecting a cutting tool and suitable cutting data) for each of those features. In other words, work performed by the CAM programmer for one geometric feature cannot be reused for other similar geometric features. The same problem applies also for CNC programming, where a CNC programmer selects how to machine an object by entering CNC instructions directly into a machine tool without using CAM software. In other words, the CNC programmer also deals with one geometric feature at a time.

By selecting a subset of the plurality of geometric features, and selecting the same strategy for machining all of the geometric features in the subset, the amount of work that the user needs to perform for defining how the object is to be manufactured may be reduced. Indeed, the user no longer needs to select a strategy (for example by selecting a cutting tool and cutting data, or operation strategy) separately for each of the identified geometric features. Time may therefore be saved.

The object to be manufactured may for example have more geometric features than the identified plurality of geometric features.

The identified plurality of geometric features may for example comprise all geometric features of the object to be manufactured.

It will be appreciated that a strategy may be selected via a single selection (such as to select between all available strategies 1, 2, 3 ,4 ...), or in a sequence of steps (such as to first select a cutting tool, and then select between those of the available strategies which involve use of the selected cutting tool).

It will be appreciated that the identified plurality of geometric features comprises at least one geometric feature more than the subset. It will also be appreciated that the subset comprises at least two geometric features.

It will be appreciated that although the same strategy is selected for machining all of the geometric features from the subset, the strategy may for example subsequently be adapted somewhat to the individual features (for example by changing the cutting data). It will also be appreciated that although the same strategy is selected for machining all of the geometric features from the subset, the exact tool paths employed for machining the respective geometric features from the subset may differ.

The model may for example be a three-dimensional model such as a CAD model.

The method may for example be a computer-implemented method.

The strategies may for example be selected by a digital processor based on input from a human user.

According to some embodiments, selecting the same strategy for machining all of the geometric features in the subset comprises selecting, jointly (or collectively) for all of the geometric features in the subset, a cutting tool to be employed for machining all of the geometric features in the subset.

According to some embodiments, selecting the same strategy for machining all of the geometric features in the subset may comprise selecting, jointly (or collectively) for all of the geometric features in the subset, a certain type of tool path pattern to be employed for machining all of the geometric features in the subset.

One type of tool path pattern may for example include circular tool paths spiraling inwards towards a center of a geometric feature, while another type of tool path pattern may for example include linear/straight tool paths moving back and forth along a surface.

Even if a certain type of tool path pattern has been selected, this does not necessarily mean that the exact tool paths to be employed have been determined (or generated). Indeed, tool paths to be employed during manufacturing of the object may for example be generated later on based on several factors in addition to the selected type of tool path pattern (such as selected cutting data, or strategies selected for other geometric features to be machined before or after the current geometric feature).

According to some embodiments, selecting the same strategy for machining all of the geometric features in the subset may comprise selecting, jointly (or collectively) for all of the geometric features in the subset, cutting data to be employed for machining all of the geometric features in the subset. The cutting data may include feed rate, cutting speed, and/or axial and radial depth of cut.

According to some embodiments, selecting the same strategy for machining all of the geometric features in the subset may comprise selecting, jointly (or collectively) for all of the geometric features in the subset, a machine tool to be employed for machining all of the geometric features in the subset.

According to some embodiments, the geometric features in the subset may be geometric features of the same type (for example flat surfaces, pockets/cavities, or holes), and/or geometric features having the same shape. In other words, the geometric features in the subset may all be similar. Geometric features of the same type and/or having the same shape may for example be machined efficiently (or may be machined to obtain an acceptable end result, such as an acceptable precision or surface quality) using the same strategy.

According to some embodiments, the subset may be selected in response to user input indicating the subset.

According to some embodiments, selecting the same strategy may comprise indicating, to a user, cutting tools available for machining a geometric feature from the subset, receiving user input indicating a selected cutting tool, and selecting a strategy involving use of the selected cutting tool.

According to some embodiments, selecting the same strategy may comprise indicating, to a user, different possible types of tool path patterns for machining a geometric feature from the subset, receiving user input indicating a selected type of tool path pattern, and selecting a strategy involving use of the selected type of tool path pattern.

According to some embodiments, selecting the same strategy may comprise indicating, to a user, different possible cutting data (such as feed rate, cutting speed and depth of cut) for use during machining of a geometric feature from the subset, receiving user input indicating selected cutting data, and selecting a strategy involving use of the selected cutting data. The cutting data indicated to the user (and/or the cutting data selected by the user) may for example vary depending on requirement on part quality, productivity improvement, tool life elongation, etc.

According to some embodiments, selecting the same strategy may comprise indicating, to a user, machine tools available for machining a geometric feature from the subset, receiving user input indicating a selected machine tool, and selecting a strategy involving use of the selected machine tool.

According to some embodiments, selecting the same strategy may comprise accessing a database including strategies for machining different geometric features, and selecting a strategy from the database to be employed for machining each of the geometric features in the subset.

The inventors have realized that that experience and know-how (or knowledge) of CAM programmers, machine tool operators and/or persons knowledgeable in the field of subtractive manufacturing (for example metal cutting) may be collected and codified into strategies for machining different geometric features, for facilitating generation of instructions (such as machine code or computer numerical control, CNC, code) for causing machine tools to manufacture objects via subtractive manufacturing. The use of a database with stored strategies helps the user to get from a model of the object to be machined (such as a CAD model) to tool paths to be employed to manufacture the object based on business priorities, e.g., part quality, yield, productivity etc. The use of a database with stored strategies may also prevent users from accidentally devising non-working machining strategies which may damage the machine tool, the cutting tool, and/or the object which is manufactured.

It will be appreciated that the strategies stored in the database need not necessarily be complete recipes specifying in detail how to machine the geometric features. The user may for example be allowed to (or even requested to) adapt or complement a selected strategy to suit the current circumstances. The user may for example be prompted to indicate desired cutting data to be employed in a selected strategy. The user may for example be prompted to indicate whether some element of a selected strategy should be changed. Still, compared to the conventional approach which was time-consuming and required plenty of experience, the proposed method reduces the complexity of the task faced by the user. Note also that the conventional approach requires CAM software and CAM programming skills. The proposed method may for example assist a user without CAM experience to arrive from a model of an object to tool paths manufacturing the object. There may for example be no need for use of traditional CAM software.

It will also be appreciated that for a strategy stored in the database, all elements of how to perform the machining do not necessarily need to be predetermined. For example, rather than involving use of predetermined cutting data, the strategy may include a formula or algorithm for determining suitable cutting data based on the circumstances. The cutting data may for example be determined based on a material from which to manufacture the object, a selected cutting tool, a selected tool path, or user preferences indicated via a user interface.

The selected strategy need not necessarily be optimal (for example fastest, or using the lowest number of cutting tools) among all possible strategies for machining the identified feature, but may be an example of a strategy which could be successfully employed for machining the identified geometric feature. Finding the absolute best strategy is practically impossible since the space of theoretically possible strategies for machining a given geometric feature is too large.

According to some embodiments, the database may include a plurality of strategies defining different ways of machining a geometric feature from the subset. Selecting a strategy from the database may comprise indicating, to a user, the plurality of strategies defining different ways of machining said geometric feature, receiving user input, and selecting, based on the user input, a strategy from the plurality of strategies defining different ways of machining the identified geometric feature.

Different strategies for machining a certain geometric feature may be suitable depending on the circumstances and the equipment available. Hence, rather than storing a single strategy for machining a certain geometric feature, the database may include a plurality of strategies defining different ways of machining the same geometric feature, and a suitable strategy may be selected based on the circumstances, so that a more suitable/appropriate strategy may be employed for machining the geometric features. Some strategies may be preferable with respect to productivity (or manufacturing speed), while other strategies may be preferable with respect to surface quality of the manufactured object, and/or with respect to the amount of tool wear caused by the manufacturing.

According to some embodiments, the method may further comprise generating one or more tool paths for manufacturing the object in accordance with the selected strategies. The instructions may be provided based on the generated one or more tool paths.

The one or more tool paths may for example be generated after strategies have been selected for all of the identified plurality of features. In other words, generation the tool path(s) may be dispensed with (or postponed) until strategies have been selected for all the identified geometric features.

Traditionally, when a CAM programmer selects strategies for machining the geometric features of an object, the tool paths are integral parts of the selected strategies. In other words, the CAM programmer figures out a strategy, including suitable tool paths, for machining the first geometric feature. Then the CAM programmer moves on to the next geometric feature to be machined, and figures out a suitable strategy, including tool paths, for machining the second feature after the first feature. This creates a sequential dependence (or time dependence), where the strategy for machining a geometric feature depends on the strategies selected for machining the earlier geometric features. Going back and changing or modifying the strategy associated with an earlier geometric feature may therefore be difficult, since the strategies for machining other features (located later in the sequence) may then also have to be changed. In other words, it may be difficult to go back and undo a decision made during the CAM programming, without having to undo several other decisions as well. The same problem applies also for CNC programming, where a CNC programmer selects how to machine an object by entering CNC instructions directly into a machine tool without using CAM software. Sequential dependence prevents also the CNC programmer from going back and undoing a decision made earlier during the CNC programming, without having to undo several other decisions as well.

The inventors have realized that this sequential dependence may be avoided by postponing generation of tool paths until after selecting strategies for all of the plurality of geometric features. Hence, the selected strategies do not need to include the actual tool paths for machining the geometric features (but may for example include indications of how tool paths may be generated). Such tool paths may instead be generated at the end when strategies have been selected for all of the identified geometric features. This facilitates going back to change or adapt a strategy which has been selected earlier for a geometric feature, without also having to modify strategies selected for other geometric features. It may also allow the user to change the order of machining operations without affecting the overall performance of the final tool path generation.

According to some embodiments, identifying a plurality of geometric features to be machined as part of manufacturing the object may comprise illustrating, to a user (for example via a display), the model of the object to be manufactured, receiving user input indicating a selected portion of the model, and identifying a geometric feature in the selected portion of the model.

According to some embodiments, the method may further comprise obtaining a model of a work piece (or of a stock model) from which to manufacture the object. The selection of at least one of the strategies may be based on the model of the work piece, and/or at least one of the selected strategies may be adapted based on the model of the work piece. The model of the work piece may for example be a three-dimensional model, such as a CAD model.

A second aspect provides embodiments of a computer program. The computer program comprises instructions which, when executed by a computer, cause the computer to perform the method of any one of the embodiments of the first aspect.

The effects and/or advantages presented above for embodiments of the method according to the first aspect may also apply to corresponding embodiments of the computer program according to the second aspect.

The computer program may for example be provided in a computer program product. In other words, a computer program product may comprise a computer-readable medium with instructions which, when the instructions are executed by a computer (or by a processor comprised in the computer), cause the computer to perform the method of any one of the embodiments of the first aspect. The computer-readable medium may for example be a transitory computer-readable medium (such as a signal or wave carrying the instructions from a transmitter to a receiver) or a non-transitory computer-readable medium (such as a storage medium or memory on which the instructions are stored). Further examples of transitory computer-readable media include an electronic signal, an optical signal, and a radio signal.

A third aspect provides embodiments of a system configured to obtain a model of an object to be manufactured via subtractive manufacturing, and identify, based on the model, a plurality of geometric features to be machined as part of manufacturing the object. The system is configured to select strategies for machining the respective geometric features via subtractive manufacturing, and provide instructions for causing one or more machine tools to manufacture the object in accordance with the selected strategies. The system is configured to select strategies for machining the respective geometric features via subtractive manufacturing by at least selecting a subset of the plurality of geometric feature, and selecting the same strategy for machining all of the geometric features in the subset. The strategy (which is referred to above as "the same strategy") for machining all of the geometric features in the subset is selected jointly for all of the geometric features in said subset.

The system may for example comprise one or more processors configured to perform the method as defined in any of the embodiments of the first aspect. The system may for example comprise one or more storage media with instructions for causing the one or more processors to perform the method as defined in any of the embodiments of the first aspect.

The system may for example comprise a database storing strategies for machining different geometric features.

The system may for example comprise a user interface (for example a HMI) for receiving the user instructions.

The system may for example comprise a display (or screen) for presenting information to a user. The display may for example be employed to show data to the user that provides insight into how the system is making decisions.

The system may for example comprise a machine code generator configured to generate the instructions for causing one or more available machine tools to manufacture the object via subtractive manufacturing.

The system may for example comprise one or more available machine tools, and/or one or more available cuttings tools, and/or one or more available fixtures for holding a work piece.

The system may for example be comprised in a machine tool, such as a CNC machine tool.

The effects and/or advantages presented above for embodiments of the method according to the first aspect may also apply to corresponding embodiments of the system according to the third aspect.

It is noted that embodiments of the present disclosure relate to all possible combinations of features recited in the claims.

### Brief description of the drawings

In what follows, example embodiments will be described in greater detail with reference to the accompanying drawings, on which:
Fig. 1 is a schematic overview of an example machining site and associated equipment;
Fig. 2 shows perspective views of example geometric features for which strategies may be stored in a database;
Fig. 3 shows two different examples of types of tool path patterns for machining the same geometric feature;
Fig. 4 shows a perspective view of an example object to be machined;
Fig. 5 is a flow chart of a method for providing instructions for causing one or more machine tools to manufacture an object, according to an embodiment;
Fig. 6 is a flow chart of an example scheme for how the same strategy may be selected for machining several similar geometric features;
Fig. 7 is a flow chart of a method similar to the method from Fig. 5, but where more details are provided regarding generation of tool paths, according to an embodiment;
Fig. 8 is a flow chart of an example scheme for how geometric features may be identified; and
Fig. 9 is a flow chart of an example scheme for selecting a strategy from a database.
All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

### Detailed description

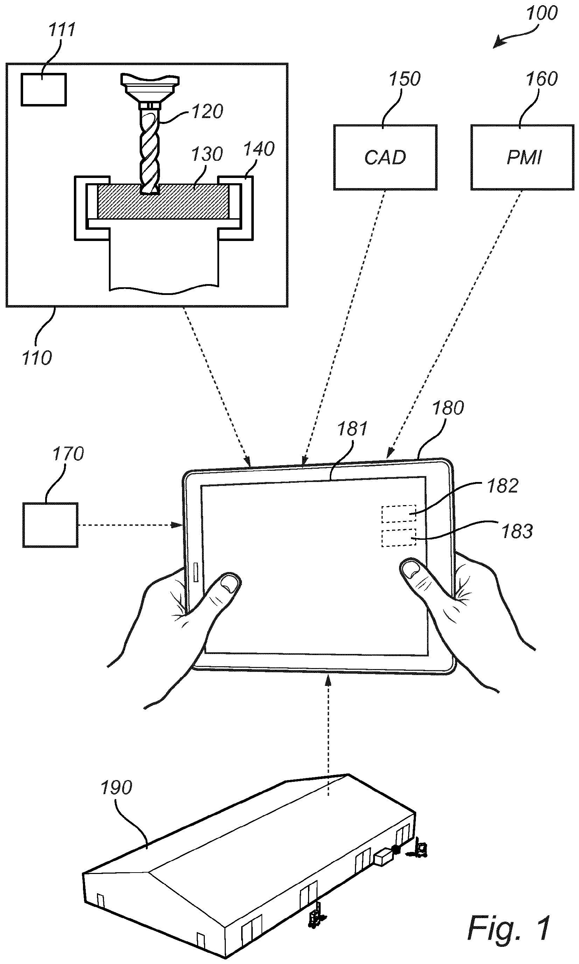

Fig. 1 is a schematic overview of a machining site 100 and associated equipment. One or more machine tools 110 are arranged at the machining site 100 for performing subtractive manufacturing. The machine tools 110 may for example be adapted for metal cutting. The machine tools 110 may be adapted to perform machining operations, for example metal cutting operations, such as drilling, milling, turning, reaming, or threading. A machine tool database may for example be employed to keep track of the available machine tools 110.

One or more cutting tools 120 are available for use by the machine tools 110 to perform machining operations where a cutting tool 120 moves relative to a work piece 130 for cutting away material from the work piece 130. Cutting tools 120 available for use by a machine tool 110 may for example be arranged in a tool magazine (not shown) from which the cutting tools 120 may be fed into position in the machine tool 110 to replace the previously used cutting tool 120. The cutting tools 120 may for example be replaced by a robotic arrangement or may be replaced manually. A cutting tool database may for example be employed to keep track of the available cutting tools 120. The cutting tools 110 may be available directly at the machining site 100, or in a warehouse 190 from which they may be retrieved.

The cutting tools 120 may include general purpose cutting tools as well as cutting tools specifically adapted for cutting in certain materials or for cutting certain shapes. Some of the cutting tools 120 may be solid cutting tools formed in a single piece of material such as steel or cemented carbide. Some of the cutting tools 120 may consist of multiple pieces fitted together to form the cutting tool. Some of the cutting tools 120 may for example be equipped with replaceable cutting inserts (not shown). The cutting inserts may for example comprise cemented carbide or ceramic material, and may for example be provided with various coatings for meeting user requirements. The coatings may for example be adapted for cutting in certain materials, and/or may be adapted for improving heat resistance and/or wear resistance. One or more fixtures 140 are available for holding the work piece 130 in position during the machining. Fixtures 140 available for use by a machine tool 110 may for example be stored in a vicinity of the machine tool 110 so that the fixtures 140 may be retrieved when needed to replace the currently employed fixture 140. The fixtures 140 may for example be replaced by a robotic arrangement or may be replaced manually.

It will be appreciated that the fixture 140 depicted in Fig. 1 is an example, and that many other types of fixtures may be envisaged.

The machine tools 110 may be equipped with cooling systems (not shown) for providing cooling during machining. The cooling may for example be provided via a cooling fluid.

The machine tools 110 are equipped with control systems 111 for controlling the machine tools 110. The control system 111 of a machine tool 110 may for example control servos of the machine tool 110 for moving the cutting tool 120 relative to the work piece 130. In some machine tools 110, the control system 111 may cause both the cutting tool 120 and the work piece 130 to move. The machine tools 110 may for example be computer numerically controlled (CNC) machine tools 110, and the control system 111 may be adapted to execute CNC code.

An object to be manufactured is defined by a model 150, such as a three-dimensional CAD model 150. Tolerances for the object regarding shape accuracy, geometric dimensions and/or surface finish may be specified via product and manufacturing information (PMI) 160. The PMI 160 may also specify the material to be employed to manufacture the object.

For the machine tools 110 to be able to manufacture the object in accordance with the model 150 and the PMI 160, appropriate instructions need to be generated for the control systems 111 of the machine tools 110.

Generation of such instructions is a complicated task involving selection of for example operation sequences (for example in which order to perform different operation steps such as facing, hole making, and threading), machine tools 110, cutting tools 120, fixtures 140, and cutting data (such as feed rate, cutting speed, and depth of cut). These factors affect the quality and precision of the manufactured object, and may also affect the manufacturing time and/or wear on the cutting tools. Hence, generation of suitable instructions for the control system 111 usually involves plenty of trial and error, even for experienced people.

However, persons knowledgeable in the field of subtractive manufacturing, and companies with extensive experience in developing cutting tools, have collected plenty of knowledge over time regarding how to machine different geometric features. This knowledge may be codified and stored as strategies in a database 170. The database 170 includes strategies for machining different geometric features. The database 170 may also include different strategies for machining a certain geometric feature depending on the material of the work piece 130.

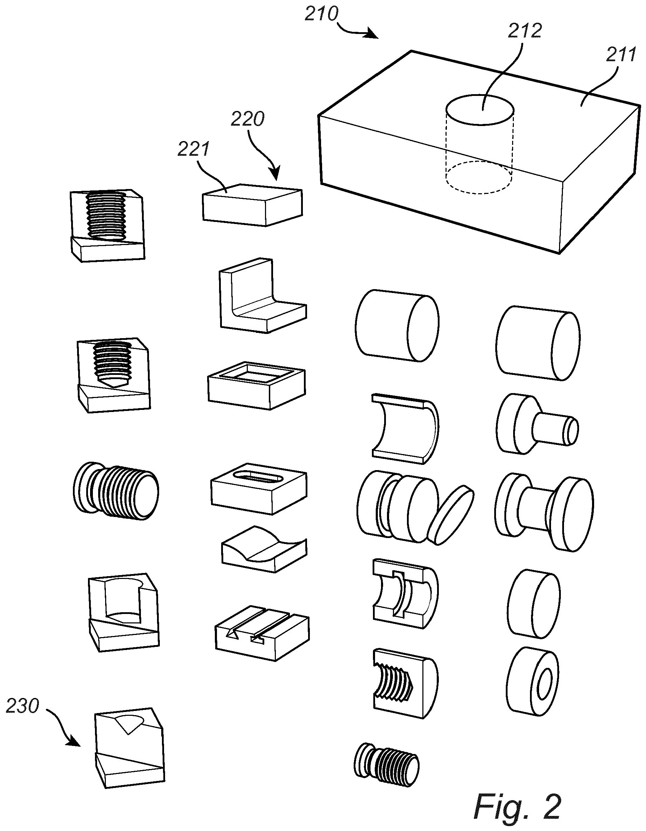

Fig. 2 shows perspective views of example geometric features for which associated strategies are included in the database 170. The geometric features covered by the database 170 may for example include a collection of common features which may have relatively simple geometries. The geometric features covered by the database 170 may also include more complicated features having several subfeatures such as holes or threads. Even quite complicated features may be included in the database 170, as long as suitable strategies for manufacturing them have been devised.

For a given object to be manufactured, geometric features to be machined as part of manufacturing the object may first be identified. The database 170 may then be employed to find strategies for machining the identified geometric features.

Although strategies for many geometric features may have been stored in the database 170, there may of course be some features lacking entries in the database 170. The database 170 may therefore be built up over time to cover even more geometric feature (or shapes) as new strategies are figured out by people in the technical field.

For some or all of the geometric features, the database 170 may include a plurality of strategies defining different ways of machining the same geometric feature. Strategies may therefore be selected from the database based on the current circumstances.

Fig. 2 shows an object 210 having several flat surfaces 211 and a hole 212 with an opening in the top surface 211. A first example geometric feature to be machined may consist of the upper flat surface 211 and the hole 212. In other words, the first example geometric feature has two subfeatures 211 and 212. In a first strategy for machining the geometric feature, the hole 212 is machined first, and the surface 211 is machined afterwards. In a second strategy, the surface 211 is machined first, and the hole 212 is machined afterwards.

Drilling of the hole 212 after forming the surface 211 (as in the second strategy) may cause deformations (or damage) at the surface 211 close to where the drill enters the hole 212. Forming the surface 211 after drilling the hole 212 (as in the first strategy) may cause deformation in the hole 212 close to the surface 211. Whether the deformations caused by the respective strategies are acceptable may depend on the tolerances specified for the object to be manufactured, but also on the cutting tools available for performing the machining. Some drills may for example cause more deformations to the surface 211 than others, so that an additional machining operation is required to remove the deformations caused by the drilling. In such cases, the first strategy (machining the hole 212 first) may be more suitable than the second strategy (machining the surface 211 first). Selection of a suitable strategy from the database 170 may therefore be based on the available cutting tools.

Another factor that may affect the selection between the first and second strategies is bending of the drill employed to make the hole 212, which may affect precision. Machining of the surface 211 first reduces the depth of the hole 212 to be drilled, which may affect how much the drill may bend.

Further, if the available drills are short, it may be desirable to employ the second strategy (machining the surface 211 first), since machining of the surface 211 first reduces the depth of the hole 212 to be drilled so that the drill reaches far enough to make the hole.

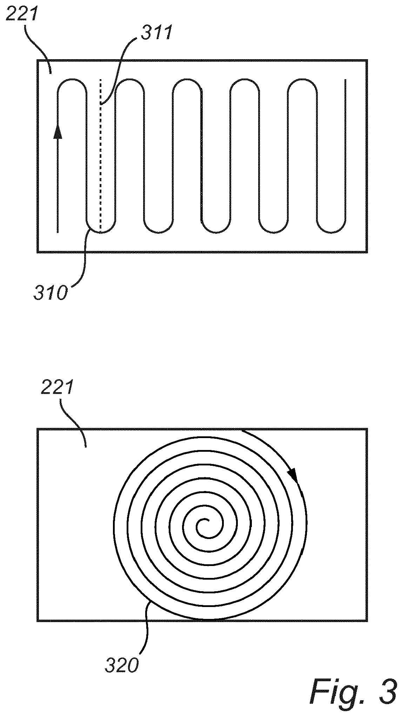

A second example geometric feature is the flat upper surface 221 of the object 220 shown in Fig. 2. Fig. 3 shows two examples of different types of tool path patterns which could be employed for machining the geometric feature 221.

Fig. 3 shows the example feature 221 from above. A first strategy for machining the feature 221 employs a type of tool path pattern 310 where the cutting tool 120 passes back and forth across the surface 221. A second strategy for machining the feature 221 employs a type of tool path pattern 320 where the cutting tool 120 spirals inwards towards the center of the surface 221.

It will be appreciated that the tool path patterns shown in Fig. 3 are schematic, and that the spiral-shaped tool path pattern 320 may for example be larger so that it covers the entire surface 221.

The first tool path pattern 310 is rather simple and convenient to use. However, the fact that the cutting tool 120 moves back and forth means that it passes the area along the dotted line 311 in different directions at the respective sides of the line 311, which may cause undesired roughness or uneven areas along the dotted line 311 when certain cutting tools are employed. The selected strategy may also have a negative influence on tool life or may in some cases cause tool breakage.

The second tool path pattern 320 allows the cutting tool 120 to perform cutting in a more uniform way along the tool path (compared to the first tool path pattern 310 where the cutting tool 120 may pass in and out of cut). The second tool path pattern 320 does not suffer from the potential problems associated with the first tool path pattern 310, and may therefore be preferable for some cutting tools 120. Selection of a suitable strategy from the database 170 may therefore be based on the available cutting tools 120.

Note that the number of passes back and forth over the surface 221 in the first tool path pattern 310 may be adapted based on the size of the available cutting tool 120. If a milling cutter with small diameter is employed, then a large number of passes may be needed. If a milling cutter with larger diameter is employed, then a smaller number of passes may be employed. This may for example affect the manufacturing time and/or tool wear.

The example strategies described above with reference to Figs. 2 and 3 are relatively simple since they relate to relatively simple (or non-complex) shapes 210 and 220. It will be appreciated that strategies for machining more complicated geometric features (such as the example feature 230 shown in Fig. 2) are typically more complicated. The skilled person realizes that strategies for machining more complicated geometric features may for example involve several different machining operations using different cutting tools and several different types of tool path patterns. Machining of some geometric features may for example include steps such as roughing, semi-finishing and finishing. Each of these steps may for example include several machining operations. The skilled person also realizes that a single strategy may include several machining operations performed by different machine tools 110. By selecting between different strategies, one may not only influence the order in which machining operations are performed, but also the order in which the different machine tools 110 are employed.

It will be appreciated that the database 170 may include strategies for machining many more geometric features than those shown in Fig. 2. It will also be appreciated that the tool path patterns 310 and 320 described above with reference to Fig. 3 are only intended as simple examples, and that other tool path patterns (for example including tool paths in three dimensions rather than tool paths in a plane as in Fig 3) may also be envisaged.

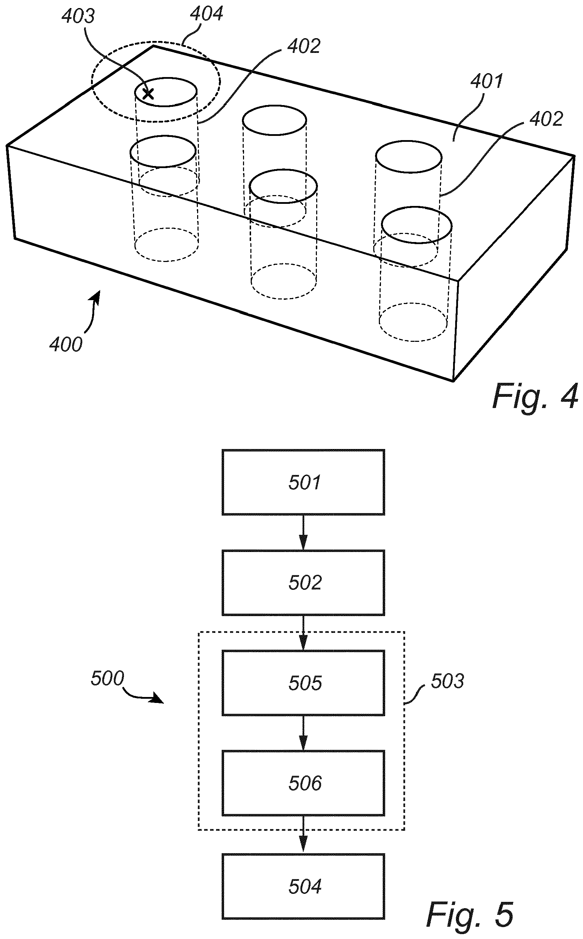

It will also be appreciated that while a strategy may be associated with a certain type of tool path pattern, the strategy need not include the actual tool paths to be employed. As will be described below with reference to Fig. 4, the actual tool paths to be employed for the manufacturing may be generated after strategies have been selected for all geometric features to be machined.

A system 180 is adapted to generate instructions for causing the machine tools 110 to manufacture the object defined by the model 150 and the PMI 160. The system 180 is equipped with a user interface 181 for user interaction. The user interface 181 may for example be a human machine interface (HMI). The HMI may for example include a touch screen 181 and one or more keys or buttons. The system 180 is adapted to select strategies from the database 170 and to generate instructions for the machine tools 110. Such tasks may for example be performed by one or more processors 182. The processors 182 may for example be digital processors.

The system 180 may for example be located at the machining site 100 in the form of a stationary or portable computer device with embedded/standalone human machine interface (HMI) with communication possibility, e.g., a tablet computer or a smart phone, equipped with suitable software. In other embodiments, the system 180 may for example be integrated as a part of one or more of the machine tools 110. Alternatively, the system 180 may be arranged at a remote location, or may be enabled on another suitable platform, e.g., cloud-based technology with possibility to communicate, compute, storage and deployment of software in secure and efficient manner. In a preferred embodiment, the system 180 is implemented as a software application running on a tablet computer.

A database 170 communicatively coupled to the system 180 and including e.g. a machine tool database and/or cutting tool database and/or a strategy database and/or a model database and/or a PMI database may for example be employed to keep track of the available machine tools 110. The database 170 may be implemented in local memory of the system 180 or as network based storage, e.g. a server or virtual/cloud server storage.

The system 180 may for example comprise the database 170. Embodiments may also be envisaged in which the database 170 is arranged at a remote location, or in which the database 170 is cloud-based.

Operation of the system 180 will now be described with reference to Figs. 4 and 5. Fig. 4 shows a perspective view of an example object 400 to be machined, and Fig. 5 is a flow chart of a method 500 performed by the system 180, according to an embodiment.

The example object 400 has several different features which need to be machined as part of manufacturing the object 400. For example, the object has an upper surface 401 and six holes 402. In the present example, the holes 402 are equipped with internal threading (not shown). Hence, machining of each hole 402 may include use of a drill to make the hole 402, followed by a threading operation to provide the internal threading.

Traditionally, a CAM programmer would define the machining operations and suitable tool paths for one hole at a time. The CAM programmer would therefore have to redo the definition of a suitable drilling operation and a suitable threading operation for each of the holes 402. The method 500 provides a more efficient approach for generating machining instructions suitable for controlling a specific machine tool 110 and available resources (e.g., fixturing, etc.) to manufacture objects such as the example object 400.

In a first step 501, the model 150 of an object to be manufactured via subtractive manufacturing is obtained 501. In the present embodiment, the model 150 is a computer-aided design (CAD) model generated by a component designer at a remote computer, and the CAD model 150 is received by the system 180. However, embodiments may also be envisaged in which the CAD model 150 is generated by the system 180, or by a user of the system 180. The PMI 160 may for example be obtained with the CAD model 150.

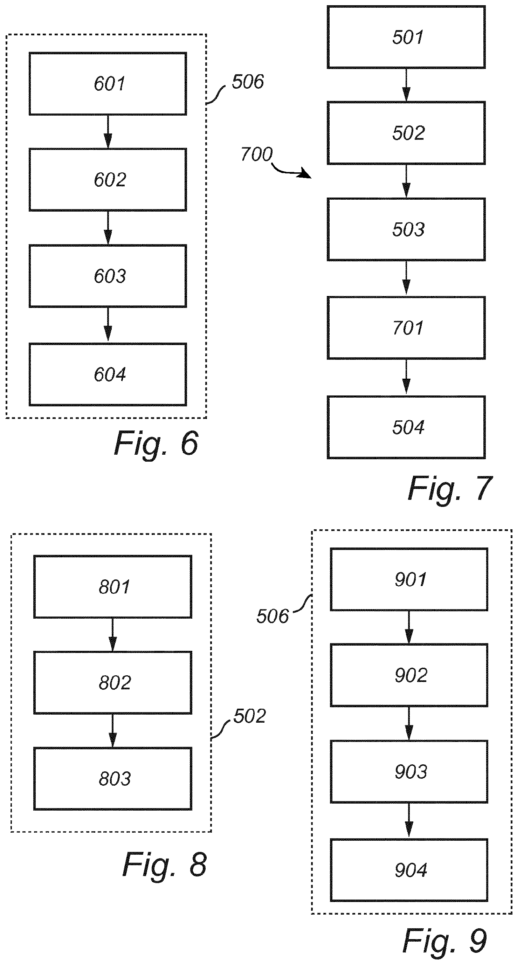

A plurality of geometric features to be machined as part of manufacturing the object is then identified 502 based on the model 150. In the present embodiment, the upper surface 401 and the six holes 402 are identified as geometric features to be machined. In general, an identified geometric feature may for example constitute a portion of the object to be manufactured, or may be an intermediate shape to be machined before the final shape of the object may be machined. The identification 502 of geometric features may for example be performed automatically via a computer algorithm. Several schemes for such automatic detection of geometric features (also referred to as feature recognition) are known in the art, and such schemes are therefore not described further herein. As described below with reference to Fig. 8, user interaction may be involved in the identification 502 of the geometric features.

Strategies for machining the respective geometric features via subtractive manufacturing are then selected 503. The strategies may for example be selected by a human user, by a computer algorithm, or by a human user assisted by an algorithm (or the system 180) that proposes suitable strategies based on the current circumstances. The selection 503 of strategies may not only be based on the shape of the geometric features to be machined, but may also be based on the shape and material of the work piece 130 from which the object is to be manufactured. The work piece material typically affects the selection of which cutting tools 120 and cutting data to employ for the machining. A model of the work piece 130 may for example be received by the system 180, for example in the form of a three-dimensional CAD model. The strategies may for example be selected 503 based on performance with respect to factors such as productivity (or manufacturing speed), surface quality, and/or tool wear.

Instructions for causing one or more machine tools 110 to manufacture the object in accordance with the selected strategies are then provided 504. The system 180 may for example comprise a machine code generator 183 for generating 504 the instructions for the machine tool 110 (or the instructions may be generated by the one or more processors 182). The instructions for the machine tool 110 may for example be provided 504 in the form of CNC code.

In an example scenario, the generated 504 instructions are then provided directly to the machine tool 110 via a wired or wireless connection. In another example scenario, the generated 504 instructions are provided from the system 180 to the machine tool 110 via the internet or via a cloud-based service. In another scenario, the system 180 is integrated as a part of the machine tool 110 itself.

The step of selecting 503 strategies for machining the respective geometric features via subtractive manufacturing comprises selecting 505 a subset of the plurality of geometric features, and then selecting 506 the same strategy for machining all of the geometric features in the subset. In the present example, the user realizes that the six holes 402 have the same shape. The user therefore selects 505 these holes 402 (for example by clicking at them on a touch screen 181) as a subset of the plurality of identified geometric features, and then jointly selects the same strategy for all of these holes 402. This strategy includes a drilling operation, and a threading operation, which will be performed for each of the holes 402. After selecting 506 a strategy for the holes, the user proceeds and selects a suitable strategy for machining the upper surface 401. Dealing with all the holes 402 simultaneously may save time and effort compared to dealing with the holes one at a time (as in traditional CAM programming). Having a common definition of the strategy to be employed for all the holes 402 may also facilitate subsequent editing or changing of the selected strategies, since such editing may be performed jointly for all the holes 402. Consider for example a scenario where an object with the same geometry is to be machined, but the object is to be made in a new material. The strategy selected for the holes may then be conveniently adapted to the new material.

As described below with reference to Fig. 7, the sequential dependence of traditional CAM programming may be avoided by postponing generation of tool paths until after strategies have been selected for all of the identified geometric features of the object to be manufactured. This allows the user to deal with (for example select strategies for) the geometric features in an order he/she finds convenient, rather than having to deal with (for example select strategies for) the geometric features in the order in which the geometric features are to be machined during manufacturing of the object. In other words, the user may for example jointly select a strategy for machining each of the holes 402, regardless of whether other geometric features will actually be machined before, after or in between machining of the holes 402. The sequential dependence of traditional CAM programming would prevent the CAM programmer from dealing with the geometric features (such as the holes 402) in this convenient and efficient manner.

Fig. 6 is a flow chart of an example scheme for how to jointly select 506 a strategy for the subset of geometric features in the method 500 described above with reference to Fig. 5. In the present example scheme, the step of jointly selecting 506 a strategy for the geometric features in the subset comprises:
- selecting 601, jointly for all of the geometric features in the subset, a machine tool 110 to be employed for machining all of the geometric features in the subset;
- selecting 602, jointly for all of the geometric features in the subset, a cutting tool 120 to be employed for machining all of the geometric features in the subset;
- selecting 603, jointly for all of the geometric features in the subset, a certain type of tool path pattern to be employed for machining all of the geometric features in the subset; and
- selecting 604, jointly for all of the geometric features in the subset, cutting data (such as feed rate, cutting speed and depth of cut) to be employed for machining all of the geometric features in the subset.

In other words, the system 180 guides the user step by step though the process of selecting different parts of a strategy for machining the selected subset of geometric features. In the present example, the user is prompted via the touch screen 181 to select a machine tool 110 and a cutting tool 120 to be employed for drilling of the holes 402. The user is also prompted via the touch screen 181 to select a machine tool 110 and a cutting tool 120 to be employed for providing threading at the walls of the holes 402. The user is also prompted via the touch screen 181 to select suitable cutting data to be employed for the machining operations. The system 180 may for example suggest several sets of suitable cutting data, for the user to choose from. In the present example, there is no need to select 603 a type of tool path pattern, since the drilling and threading operations are rather straightforward. However, as described above with reference to Fig. 3, some machining operations may be performed using different types of tool path patterns.

Fig. 7 is a flow chart of a method 700 similar to the method 500 described above with reference to Fig. 5, but where more details are provided regarding generation of tool paths, according to an embodiment.

In the method 700, tool paths for manufacturing the object in accordance with the selected strategies are generated 701 after strategies have been selected 503 for all of the identified geometric features. The machine tool instructions are then provided 504 based on the generated tool paths.

Since generation 504 of the tool paths is postponed until after strategies have been selected for all of the identified geometric features, the sequential dependence of traditional CAM programming is avoided. The user may therefore conveniently rearrange the order in which to machine the different geometric features, or change selected strategies for machining the geometric features, without also having to change strategies selected for other geometric features. In other words, the user may undo a decision made in the past regarding a machining strategy for a geometric feature, without having to undo practically all decisions made since then. Since the sequential dependence is avoided, the user may also select strategies for the geometric features in an order that is convenient or efficient for the user, rather than in an order which the geometric features are actually going to be machined.

Fig. 8 is a flow chart of an example scheme for how geometric features may be identified in the method 500 described above with reference to Fig. 5. In the present example scheme, the step 502 of identifying a plurality of geometric features to be machined comprises
- illustrating 801, to a user, the model of the object to be manufactured,
- receiving 802 user input indicating a selected portion of the model, and
- identifying 803 a geometric feature in the selected portion of the model.

As an example, reference is made to the example object 400 in Fig. 4. In the present example, a model 150 of the object 400 is illustrated 801 at the touch screen 181 of the system 180. The user is prompted to select a geometric feature, and therefore clicks at the screen 181 close to one of the holes 402. The location of the click is indicated by the x with reference 403. A region 403 around the location 403 of the click is then searched by the system 180 for geometric features of the types stored in the database 170. In the present example, holes of the same type as the holes 402 of the object 400 are listed in the database 170 (but are not shown as separate geometric features in Fig. 2) together with associated strategies for machining the holes. The hole 402 in the region 404 is therefore identified 803. The user the goes on to click at the other five holes 402 of the object 400. When all six holes 402 have been identified, the user indicates that these holes are to be treated jointly when selecting strategies. The six holes 402 forms a subset of the total set of geometric features of the object 400, as describe above in relation to step 505 of the method 500.

Fig. 9 is a flow chart of an example scheme for selecting a strategy in the method 500 described above with reference to Fig. 5. In the present example scheme, the database 170 includes a plurality of strategies defining different ways of machining a geometric feature from the subset of geometric features referred to in steps 505-506 of the method 500. In the present example scheme, the step of selecting 506 the same strategy for machining all of the geometric features in the subset of geometric features comprises:
- accessing 901 the database 170 including strategies for machining different geometric features,
- indicating 902, to the user, a plurality of strategies defining different ways of machining the geometric feature from the subset of geometric features,
- receiving 903 user input, and
- selecting 904, based the user input, a strategy from the plurality of strategies defining different ways of machining the geometric feature.

In other words, the user selects (with or without assistance from the system 180) among the strategies available in the database 170 for machining the identified geometric feature. The selected strategy is then employed for all of the geometric features in the subset of geometric features.

A selected 904 strategy may include at least:
- a sequence of operations including for example facing, hole-making, and threading;
- one or more machine tools 110 for performing the manufacturing;
- one or more cutting tools 120 for use by the one or more machine tools 110,
- one or more fixtures 140 for holding a work piece 130; and
- a type of tool path pattern to be employed.

The strategy may also include use of cooling fluids for providing cooling during the machining. The strategy may also include suitable cutting data, or means for determining suitable cutting data (such as feed rate, cutting speed, and depth of cut) based on the circumstances. The cutting data may for example be determined based on the material of the work piece 130, the tolerance set by the PMI 160, a selected type of tool path pattern, and a selected cutting tool 120.

The person skilled in the art realizes that the present invention is by no means limited to the preferred embodiments described above. On the contrary, many modifications and variations are possible within the scope of the appended claims. For example, many different geometric features than those shown in Fig. 2 may be covered by the database 170. Further, it will be appreciated that the tool path patterns shown in Fig. 3 merely serve as examples, and that many other tool path patterns may be envisaged. It will be appreciated that the machining site 100 depicted in Fig. 1 is a simplified example. For example, Fig. 1 only shows a single machine tool 110, a single cutting tool 120, and a single fixture 140, while a real machining site may typically include several available machine tools 110, cutting tools 120, and fixtures 140.

It will be appreciated that a processor 182 (or processing circuitry) may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide computer functionality, either alone or in conjunction with other computer components (such as a memory or storage medium).

It will also be appreciated that a memory or storage medium (or a computer-readable medium) may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by a processor or processing circuitry.

It will also be appreciated that a user may provide user input to the system 180 by checking tick-boxes, moving sliders, pressing keys or in any other way interacting via a HMI 181 of the system 180.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method (500) comprising:
obtaining (501) a model (150) of an object (400) to be manufactured via subtractive manufacturing;
identifying (502), based on the model, a plurality of geometric features (401, 402) to be machined as part of manufacturing the object;
selecting (503) strategies for machining the respective geometric features via subtractive manufacturing; and
providing (504) instructions for causing one or more machine tools (110) to manufacture the object in accordance with the selected strategies,
wherein selecting strategies for machining the respective geometric features via subtractive manufacturing comprises:
selecting (505) a subset of the plurality of geometric features; and
selecting (506) the same strategy for machining all of the geometric features (402) in said subset, wherein the strategy for machining all of the geometric features in said subset is selected jointly for all of the geometric features in said subset.

2. The method of claim 1, wherein selecting the same strategy for machining all of the geometric features in said subset comprises:
selecting (602), jointly for all of the geometric features in said subset, a cutting tool (120) to be employed for machining all of the geometric features in said subset.

3. The method of any of the preceding claims, wherein selecting the same strategy for machining all of the geometric features in said subset comprises:
selecting (603), jointly for all of the geometric features in said subset, a certain type of tool path pattern (310, 320) to be employed for machining all of the geometric features in said subset.

4. The method of any of the preceding claims, wherein selecting the same strategy for machining all of the geometric features in said subset comprises:
selecting (604), jointly for all of the geometric features in said subset, cutting data to be employed for machining all of the geometric features in said subset.

5. The method of any of the preceding claims, wherein selecting the same strategy for machining all of the geometric features in said subset comprises:
selecting (601), jointly for all of the geometric features in said subset, a machine tool to be employed for machining all of the geometric features in said subset.

6. The method of any of the preceding claims, wherein the geometric features in said subset are:
geometric features of the same type; and/or
geometric features having the same shape.

7. The method of any of the preceding claims, wherein said subset is selected in response to user input indicating said subset.

8. The method of any of the preceding claims, wherein selecting the same strategy comprises:
a)
- indicating, to a user, cutting tools (120) available for machining a geometric feature from said subset,
- receiving user input indicating a selected cutting tool, and
- selecting a strategy involving use of the selected cutting tool; or
b)
- indicating, to a user, different possible types of tool path patterns (310, 320) for machining a geometric feature from said subset,
- receiving user input indicating a selected type of tool path pattern, and
- selecting a strategy involving use of the selected type of tool path pattern; or
c)
- indicating, to a user, different possible cutting data for use during machining of a geometric feature from said subset,
- receiving user input indicating selected cutting data, and
- selecting a strategy involving use of the selected cutting data; or
d)
- indicating, to a user, machine tools (110) available for machining a geometric feature from said subset,
- receiving user input indicating a selected machine tool, and
- selecting a strategy involving use of the selected machine tool; or
e) any combination of the steps a), b), c) and d).

9. The method of any of the preceding claims, wherein selecting the same strategy comprises:
accessing (901) a database (170) including strategies for machining different geometric features; and
selecting a strategy from said database to be employed for machining each of the geometric features in said subset.

10. The method of claim 9, wherein the database includes a plurality of strategies defining different ways of machining a geometric feature from said subset, and wherein selecting a strategy from said database comprises:
indicating (902), to a user, said plurality of strategies defining different ways of machining said geometric feature;
receiving (903) user input; and
selecting (904), based on the user input, a strategy from said plurality of strategies defining different ways of machining said identified geometric feature.

11. The method of any of the preceding claims, further comprising:
generating (701) one or more tool paths for manufacturing the object in accordance with the selected strategies,
wherein said instructions are provided based on the generated one or more tool paths.

12. The method of any of the preceding claims, wherein identifying a plurality of geometric features to be machined as part of manufacturing the object comprises:
illustrating (801), to a user, the model of the object to be manufactured;
receiving (802) user input indicating a selected portion of the model; and
identifying (803) a geometric feature in the selected portion of the model.

13. The method of any of the preceding claims, further comprising:
obtaining a model of a work piece (130) from which to manufacture the object,
wherein:
the selection of at least one of the strategies is based on the model of the work piece; and/or
at least one of the selected strategies is adapted based on the model of the work piece.

14. A computer program comprising instructions which, when the instructions are executed by a computer, cause the computer to perform the method of any of the preceding claims.

15. A system (180) configured to:
obtain a model (150) of an object (400) to be manufactured via subtractive manufacturing;
identify, based on the model, a plurality of geometric features (401, 402) to be machined as part of manufacturing the object;
select strategies for machining the respective geometric features via subtractive manufacturing; and
provide instructions for causing one or more machine tools (110) to manufacture the object in accordance with the selected strategies,
wherein the system is configured to select strategies for machining the respective geometric features via subtractive manufacturing by at least:
selecting a subset of the plurality of geometric features; and
selecting the same strategy for machining all of the geometric features (402) in said subset, wherein the strategy for machining all of the geometric features in said subset is selected jointly for all of the geometric features in said subset.

16. A machine tool (110) comprising the system of claim 15.
